# EUROPEAN PATENT SPECIFICATION

(11) **EP 2 460 686 B1**
(45) Date of publication and mention of the grant of the patent: **12.02.2014**
(21) Application number: 10425375.2
(22) Date of filing: 06.12.2010
(51) Int. Cl.: B60N 3/00, B60N 2/46, B60N 2/24, B60P 3/36

(54) **Vehicle table and vehicle fridge housing integrating the table, in particular for industrial or commercial vehicles**
Fahrzeugtisch und Kühlschrankgehäuse mit einem solchen Tisch
Table pour un vehicule et un armoire de réfrigération avec ledit table

(43) Date of publication of application: 06.06.2012
(73) Proprietor: Iveco S.p.A., 10156 Torino (IT)
(72) Inventor: Armigliato, Marco, 10153 Torino (IT); Bruno, Giuseppe, 10129 Torino (IT)
(74) Representative: Borsano, Corrado

(56) References cited:
- WO-A1-95/00360
- WO-A1-99/35003
- DE-A1-102009 033 799
- JP-U- 63 182 938

## Description

### Field of the invention

The present invention refers to a vehicle table and to a vehicle fridge housing integrating the table, in particular for industrial or commercial vehicles.

### Description of the prior art

It is extremely difficult to have vehicle furnishing, especially for industrial vehicles, with the right dimensions that leave as much free space as possible.

For this purpose retractable support surfaces, tables, etc. are known in the art.

In a specific configuration of a cabin of an industrial vehicle, a problem arises in order to provide a retractable table that, in usage position, is high enough to avoid interfering with both the legs of the passenger and the other objects in the cabin.

In such cabin configuration, the space for housing the table in resting position is under a flat surface, in particular a bed inside the cabin, placed transversely with respect to the travelling direction.

The height of the bed is such that it is necessary to use particularly complex and delicate leverages and anchorage mechanisms, in order to hang or anyway to house a retractable table under the bed.

An interesting solution is given in WO9500360, where a foldaway table is integral with the arm of a seat. The vehicle table of WO9500360 shows the features of the preamble of claim 1.

A further problem derives from the need to possibly house a fridge inside the cabin. In such condition, it may happen that the leverages or the table itself interfere with the accessibility of the fridge.

### Summary of the invention

The aim of the present invention is to provide a vehicle table, in particular for industrial or commercial vehicles, suitable to solve the problem set forth above.

The object of the present invention is a vehicle table, in particular for industrial and commercial vehicles, according to claim 1.

According to another aspect of the present invention, the table may be better exploited if it is integrated in a vehicle fridge housing, in particular for industrial vehicles, which solves the problem of the table interfering with the fridge housing.

The object of the present invention is a vehicle fridge housing, in particular for industrial vehicles, according to claim 5 and a vehicle fridge according to claim 6.

A further aim of the present invention is to provide a vehicle cabin disposition of an industrial or commercial vehicle, wherein the table is installed in order to ensure the best usage of the table and to optimize the access to the on board bed.

A further object of the present invention is a vehicle cabin disposition of an industrial or commercial vehicle, according to claim 7.

The provided table can be both extracted and raised in order to improve its accessibility and ergonomics, even though in closed position it should be stored under another object, such as in particular a vehicle bed.

Thanks to the present invention, it is not necessary to install the bed too high, making it difficult to be reached, in order to integrate a retractable table under the bed.

The dependent claims describe the preferred embodiments of the invention, and are an integral part of this description.

### Brief description of the Figures

Further characteristics and advantages of the invention will be more apparent in light of a detailed description of a preferred, but non-exclusive, embodiments of a vehicle table and vehicle fridge housing integrating the table, shown with the help of the drawings that are attached hereto, which are merely illustrative and not limitative, in which:
Fig. 1 shows an axonometric view of a retractable vehicle table in closed position, in particular associated to a fridge housing,
Fig. 2 shows a side view of the table of figure 1, in partially opened position,
Figs. 3 and 4 respectively show the axonometric view of figure 2 wherein the table is partially opened and a detail of such view,
Figs. 5 and 6 respectively show a side view of figure 1 wherein the table is fully opened and a detail of such view,

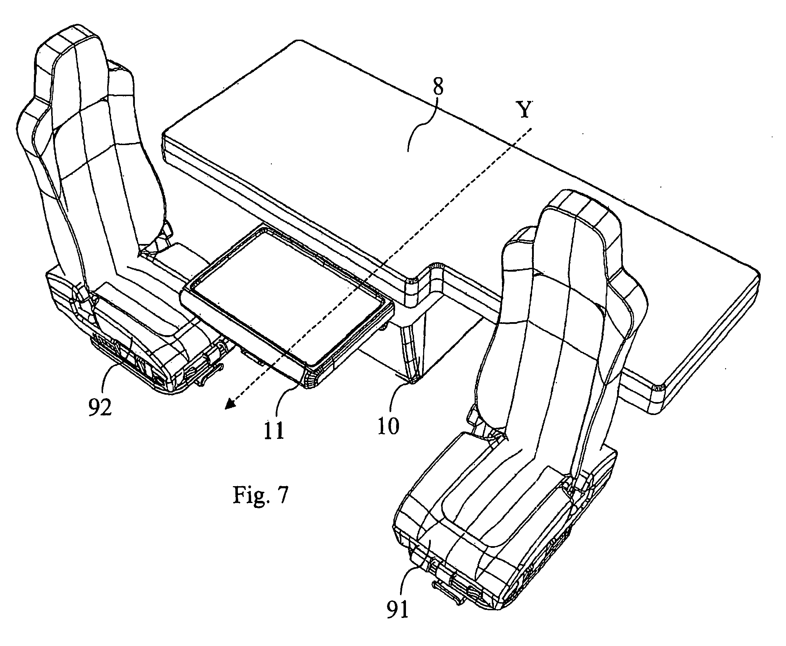

Fig. 7 show a possible layout of the table associated to a fridge housing in a vehicle cabin.

In the figures the same reference numbers and letters identify the same elements or components.

### Detailed description of a preferred embodiment of the invention

The table 1 that is object of the present invention comprises at least a resting surface 11 comprising an upper face A and a lower face B.

At least a telescopic arm 2 connects the resting surface 11 to a part of the vehicle.

In particular, the telescopic arm comprises a first portion 21 having longitudinal development associated to the resting surface 11 by means of at least two connecting rods 31 and 32, each one of them being hinged to the first portion 21 of the telescopic arm by one end, and to the lower face B of the resting surface 21 by the other end.

Since the two connecting rods 31 and 32 are hinged to the first portion 21 of the telescopic arm in different points, the first portion 21, the connecting rods 31 and 32 and the resting surface define an articulated quadrilateral that allows the resting surface to be lifted or to be lowered with respect to the telescopic arm. Moreover, at least one of the connecting rods 31 and 32 comprises a limit stop element 41 and/or 42, for example a tooth or a cam, placed near a hinged end of the connecting rod, preferably the end hinged to the telescopic arm, in order to block the rotation of the connecting rods a few degrees after the upper dead center, namely higher than 90° and lower than 180° with respect to the position where the connecting rods overlap the telescopic arm, namely to the closing position of the table. Thus the resting surface, after passing the upper dead center, remains in a raised position with respect to the telescopic arm, for a better usage of the table.

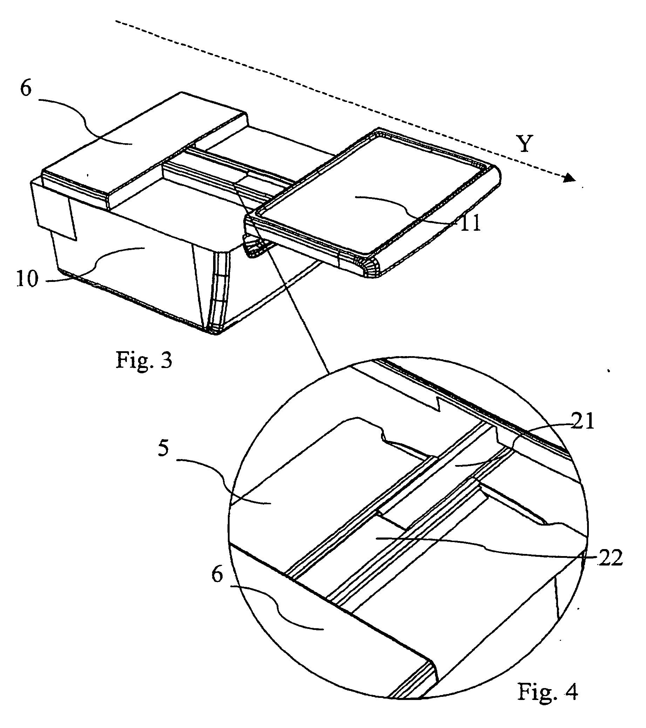

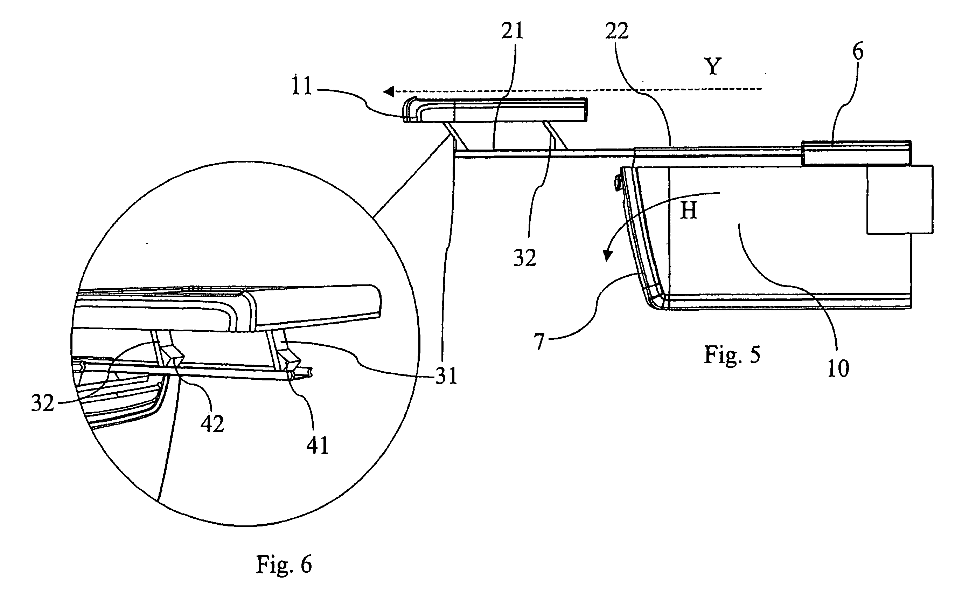

Preferably the limit stop elements, when placed at the end of the connecting rod hinged to the telescopic arm, are placed in forward position, namely according to the direction of extraction Y of the resting surface, even though the mechanism works also with the limit stop elements placed backwards with respect to the direction of extraction of the resting surface. The aforementioned preferred configuration is considered as advantageous, since, if the table is pushed according to a direction opposite to the direction Y, it is possible to close the telescopic arm 2 and to lower the resting surface 11 at the same time, see figures 3, 4 and 5, 6.

The connecting rods may have dimensions that allow the resting surface 11 to reach the desired height, in relation to, for example, the height of the seat, in order to improve the overall ergonomics.

As it can be seen in the figures, the connecting rods have the same length, so that the resting surface is either skimming or anyway parallel to the telescopic arm 2. Preferably the last portion 22, with a longitudinal development, of the telescopic arm 2 is skimming a flat surface 5 to which it is firmly fixed. In an alternative embodiment, the free end of the last portion 22 is associated to a lateral wall of the cabin by means, for example, of a bolted or welded flange. Or, in another alternative embodiment, as it will be explained later, the telescopic arm is fixed to the lower part of a bed, so that the table is extractable with respect to the bed.

Obviously, it is important that the resting surface is in horizontal position, at least in the usage position.

Preferably, the telescopic arm is single and is placed in the middle, so that if the user's position is in front of the table, with respect to the opening direction Y, the arm 2 does not interfere with the user's legs.

However, it is possible to associate more than one telescopic arm to the resting surface 11.

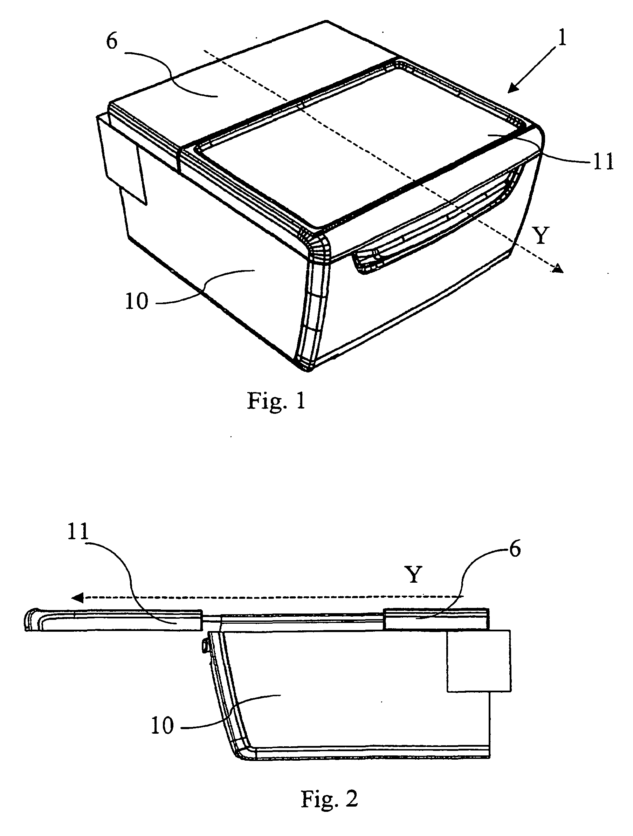

Moreover, the resting surface is preferably bordered by a containment perimetral frame, which prevents the objects placed on the resting surface from falling to the ground when the vehicle where the table is installed is in motion. According to another aspect of the invention, the table comprises a second ancillary resting surface 6, also skimming said flat surface 5 and placed next to the telescopic arm 2, so that when in table 1 is in closed position, the resting surface 11 and the ancillary resting surface 6 form a single resting surface, as it can be seen in figure 1.

According to a further aspect of the invention, the aforementioned flat surface 5 is preferably part of a fridge or of a vehicle fridge housing or anyway of a refrigerated compartment. In any case, such housing or fridge is indicated in the drawings by number 10.

Such housing 10 may be shaped in any way, but preferably it has a horizontal upper surface defining the aforementioned flat surface 5. Moreover, the housing 10 comprises a door 7, giving access to the internal part, that can be tilted according to the arrow H, by rotating within a vertical plane where the telescopic arm 2 rests.

According to a further aspect of the present invention, a cabin of industrial vehicle comprises in its rear part a bed 8 placed transversally with respect to the travelling direction of the vehicle and comprises a fridge 10 with its corresponding table 1 associated to the upper surface 5 of the fridge, the fridge being housed under the bed in central position.

According to a preferred embodiment of the invention, also the fridge is associated to the floor of the vehicle cabin by means of guides that allow the fridge 10 to be moved forward of backward, parallely to the opening direction of the resting surface 11.

Moreover, the vehicle preferably comprises seats 91 and 92 that can rotate with respect to the vehicle floor, thus the resting surface 11 is divided into two parts with respect to the telescopic arm 11, so that a portion projects towards the passenger and another portion projects towards the driver. Also in this case, a single telescopic arm in central position with respect to a dimension, width or length, of the resting surface is advantageous.

The elements and the characteristics described in the different preferred embodiments may be combined without departing from the scope of the present invention.

## Claims

1. Vehicle table, in particular for industrial vehicles, in particular of the retractable type according to a direction of extraction (Y), comprising
- a resting surface (11) comprising an upper face and a lower face (B) and
- support means (2, 31, 32) of the resting surface (11) connected to the lower face,
said support means comprising
- at least a telescopic arm associated to said lower surface (B) by at least a first (31) and a second (32) connecting rod; the connecting rods being hinged to said telescopic arm and to said resting surface in order to define an articulated quadrilateral;
- limit stop means (41, 42) suitable to determine a stop position of a rotation of the connecting rods (31, 32) comprised between 90° and 180° with respect to a position where the connecting rods overlap the telescopic arm
wherein said telescopic arm comprises at least a first part (21) connected to said resting surface (11) by means of the connecting rods (31, 32) and at least a last part (22)
**characterized in** comprising
a support surface (5) to which said last part (22) of the telescopic arm is connected in a skimming way and an ancillary resting surface (6) connected to said support surface (5) next to the telescopic arm, so that, when the table (1) is in closed position, the resting surface (11) and the ancillary resting surface (6) form a single resting surface
and **in that**
said support surface (5) is an upper surface of a refrigerated compartment and/or a fridge housing and/or a fridge (10).

2. Table according to claim 1, wherein said limit stop means are formed by a tooth or a cam (41, 42), placed near at least an end of at least a connecting rod (31, 32).

3. Table according to claim 2, wherein said end comprising the tooth or cam (41, 42) is hinged to the telescopic arm and wherein the tooth or cam is positioned forward with respect to the extracting direction (Y) of the resting surface (11).

4. Table according to any of the previous claims, wherein said resting surface (11) comprises a containment perimetral frame.

5. Fridge housing (10), in particular for industrial or commercial vehicles, comprising said upper surface (5) to which the table is associated according to any of the previous claims.

6. Fridge comprising said upper surface (5) to which the table is associated according to one of the claims from 1 to 4.

7. Disposition of a vehicle cabin of an industrial or commercial vehicle, comprising a table (1) according to one of the claims from 1 to 4.

8. Disposition according to claim 7, wherein said table (1) is integrated in a fridge housing or a fridge (10).

9. Disposition according to claim 8, further comprising a bed (8) transversally placed with respect to a travelling direction of the cabin and a fridge (10) placed under the bed in central position.

10. Disposition according to claim 9, wherein the fridge is associated to a cabin's floor by means of sliding guides suitable to allow a forward and backward movement of the fridge according to a travelling direction of the vehicle.

## Patentansprüche

1. Fahrzeug-Tisch, insbesondere für Industrie-Fahrzeuge, insbesondere vom zurückziehbaren Typ entsprechend einer Auszieh-Richtung (Y), umfassend
- eine ruhende Oberfläche (11), umfassend eine obere Fläche und eine untere Fläche (B); und
- Stütz-Einrichtungen (2, 31, 32) der ruhenden Oberfläche (11), die mit der unteren Fläche verbunden sind;
wobei die Stütz-Einrichtungen umfassen:
- wenigstens einen Teleskop-Arm, der mit der unteren Oberfläche (B) durch wenigstens einen ersten (31) und einen zweiten (32) Verbindungsstab verbunden ist, wobei die Verbindungsstäbe schwenkbar an dem Teleskop-Arm und an der ruhenden Oberfläche angebracht sind, um ein bewegliches Viereck zu definieren;
- Begrenzungs-Haltepunkt-Einrichtungen (41, 42), die geeignet sind, um eine Stopp-Position einer Schwenkung der Verbindungsstäbe (31, 32) zu ermitteln, die zwischen 90 ° und 180 ° in Bezug auf eine Position einschließt, in der die Verbindungsstäbe mit dem Teleskop-Arm überlappen;
- worin der Teleskop-Arm wenigstens einen ersten Teil (21), der mit der ruhenden Oberfläche (11) mittels der Verbindungsstäbe (31, 32) verbunden ist, und wenigstens einen letzten Teil (22) umfaßt;
**dadurch gekennzeichnet, daß** er umfaßt:
- eine Stütz-Oberfläche (5), mit der der letzte Teil (22) des Teleskop-Arms in gleitender Weise verbunden ist, und eine zusätzliche ruhende Oberfläche (6), die mit der Stütz-Oberfläche (5) neben dem Teleskop-Arm verbunden ist, so daß dann, wenn der Tisch (1) in geschlossener Position ist, die ruhende Fläche (11) und die zusätzliche ruhende Fläche (6) eine einzige ruhende Fläche bilden;
und dadurch, daß
- die Stütz-Oberfläche (5) eine obere Oberfläche eines Kühl-Kompartments und/oder eines Kühlschrank-Gehäuses und/oder eines Kühlschranks (10) ist.

2. Tisch gemäß Anspruch 1, worin die Begrenzungs-Haltepunkt-Einrichtungen gebildet werden von einem Zahn oder einer Nocke (41, 42), der/die nahe wenigstens einem Ende wenigstens eines Verbindungsstabs (31, 32) platziert ist.

3. Tisch gemäß Anspruch 2, worin das Ende, das den Zahn oder die Nocke (41, 42) umfaßt, schwenkbar an dem Teleskop-Arm angebracht ist, und worin der Zahn oder die Nocke vorwärts in Bezug auf die Auszieh-Richtung (Y) der ruhenden Oberfläche (11) positioniert ist.

4. Tisch gemäß irgendeinem der vorigen Ansprüche, worin die ruhende Oberfläche (11) einen Eingrenzugs-Umfangs-Rahmen umfaßt.

5. Kühlschrank-Gehäuse (10), insbesondere für Industrie- oder Geschäfts-Fahrzeuge, umfassend die obere Oberfläche (5), mit der ein Tisch nach irgendeinem der vorigen Ansprüche verbunden ist.

6. Kühlschrank, umfassend die obere Oberfläche (5), mit der der Tisch gemäß einem der Ansprüche von 1 bis 4 verbunden ist.

7. Anordnung einer Fahrzeug-Kabine eines Industrie- oder Geschäfts-Fahrzeugs, umfassend einen Tisch (1) gemäß einem der Ansprüche von 1 bis 4.

8. Anordnung gemäß Anspruch 7, worin der Tisch (1) in ein Kühlschrank-Gehäuse oder in einen Kühlschrank (10) integriert ist.

9. Anordnung gemäß Anspruch 8, weiter umfassend ein Bett (8), das in Bezug auf die Reise-Richtung der Kabine quer platziert ist, und einen Kühlschrank (10), der unter dem Bett in zentraler Position platziert ist.

10. Anordnung gemäß Anspruch 9, worin der Kühlschrank mit dem Boden der Kabine mittels gleitender Führungen verbunden ist, die geeignet sind, eine Vorwärts- und Rückwärts-Bewegung des Kühlschranks entsprechend einer Reise-Richtung des Fahrzeugs zu erlauben.

## Revendications

1. Table de véhicule, en particulier pour des véhicules industriels, en particulier du type rétractable selon un sens d'extraction (Y), comprenant :
- une surface de repos (11) comprenant une face supérieure et une face inférieure (B), et
- des moyens de support (2, 31, 32) de la surface de repos (11) raccordés à la face inférieure,
lesdits moyens de support comprenant
- au moins un bras télescopique associé à ladite surface inférieure (B) par au moins une première (31) et une deuxième (32) tige de raccordement ; les tiges de raccordement étant articulées sur ledit bras télescopique et sur ladite surface de repos afin de définir un quadrilatère articulé ;
- des moyens d'arrêt de limite (41, 42) appropriés pour déterminer une position d'arrêt d'une rotation des tiges de raccordement (31, 32) compris entre 90° et 180° par rapport à une position où les tiges de raccordement chevauchent le bras télescopique,
dans laquelle ledit bras télescopique comprend au moins une première partie (21) raccordée à ladite surface de repos (11) au moyen des tiges de raccordement (31, 32) et au moins une dernière partie (22),
**caractérisé en ce qu'**elle comprend
une surface de support (5) à laquelle ladite dernière partie (22) du bras télescopique est raccordée en effleurement et une surface de repos secondaire (6) raccordée à ladite surface de support (5) à côté du bras télescopique, pour que, lorsque la table (1) est dans une position fermée, la surface de repos (11) et la surface de repos secondaire (6) forment une seule surface de repos, et **en ce que**
ladite surface de support (5) est une surface supérieure d'un compartiment réfrigéré et/ou un logement de réfrigérateur et/ou un réfrigérateur (10).

2. Table selon la revendication 1, dans laquelle lesdits moyens d'arrêt de limite sont formés par une dent ou une came (41, 42), placée près d'au moins une extrémité d'au moins une tige de raccordement (31, 32).

3. Table selon la revendication 2, dans laquelle ladite extrémité comprenant la dent ou came (41, 42) est articulée sur le bras télescopique et dans laquelle la dent ou came est positionnée vers l'avant par rapport au sens d'extraction (Y) de la surface de repos (11).

4. Table selon l'une quelconque des revendications précédentes, dans laquelle ladite surface de repos (11) comprend un cadre périmétrique de confinement.

5. Logement de réfrigérateur (10), en particulier pour des véhicules industriels ou commerciaux, comprenant ladite surface supérieure (5) à laquelle la table est associée selon l'une quelconque des revendications précédentes.

6. Réfrigérateur comprenant ladite surface supérieure (5) à laquelle la table est associée selon l'une des revendications 1 à 4.

7. Disposition d'une cabine de véhicule d'un véhicule industriel ou commercial, comprenant une table (1) selon l'une des revendications 1 à 4.

8. Disposition selon la revendication 7, dans laquelle ladite table (1) est intégrée dans un logement de réfrigérateur ou un réfrigérateur (10).

9. Disposition selon la revendication 8, comprenant en outre un lit (8) positionné transversalement par rapport à un sens de déplacement de la cabine et un réfrigérateur (10) positionné sous le lit dans une position centrale.

10. Disposition selon la revendication 9, dans laquelle le réfrigérateur est associé à un sol de la cabine au moyen de guidages coulissants appropriés pour permettre un mouvement vers l'avant et vers l'arrière du réfrigérateur selon un sens de déplacement du véhicule.
